# EUROPEAN PATENT SPECIFICATION

(11) **EP 2 431 609 B1**
(45) Date of publication and mention of the grant of the patent: **08.07.2015**
(21) Application number: 11181208.7
(22) Date of filing: 14.09.2011
(51) Int. Cl.: F03D 11/04

(54) **Horizontal axis wind turbine**
Windturbine mit horizontaler Achse
Éolienne à axe horizontal

(30) Priority: 21.09.2010 JP 2010210319
(43) Date of publication of application: 21.03.2012
(73) Proprietor: Hitachi, Ltd., Chiyoda-ku Tokyo 100-8280 (JP)
(72) Inventor: Tobinaga, Ikuo, Tokyo, 160-8316 (JP)
(74) Representative: MERH-IP Matias Erny Reichl Hoffmann

(56) References cited:
- US-A1- 2007 125 037
- US-A1- 2010 117 353
- US-A1- 2010 122 508

## Description

### FIELD OF THE INVENTION

The present invention relates to a structure for mounting parts inside a wind turbine tower.

### BACKGROUND OF THE INVENTION

Conventionally, component parts such as a power module have been mounted inside the tower of a wind turbine that is constructed as a wind power generator.

In Japanese Laid-open Patent Application Publication JP-A-2005-503535 and Japanese Laid-open Patent Application Publication JP-A-2009-287563, parts such as a power module are mounted in the space inside the tower being arranged in a vertical layered shape. That is, in the literature above, a part such as a power module is mounted to the base of the tower before the tower is raised, and a frame is provided in order to mount other parts above this part.

This frame comprises a parts mounting section in which parts are mounted, and columns that support the parts mounting section, with the bottom ends of the columns being fastened to the base of the tower. The parts mounting section of the frame is placed above the part that is mounted on the base. Therefore, it is possible to mount other parts above the part.

However, the conventional art described above has the following problems. In the conventional art, the bottom end of the frame is fastened to the base of the tower, so there is a problem in that the work of positioning and the work of fastening the frame on site (for example, the work of fastening the frame to the base using anchor bolts) requires time, and there is a problem in that the precision of positioning the frame depends on on-site work.

On the other hand, the tower sways due to the wind or movement of the wind turbine. When that happens, mainly a bending moment is applied to the tower, thus a compression load and a tensile load are alternately applied to the side wall sections of the tower. Moreover, the compression load is directly transmitted from the side wall sections to the base, and the tensile load may concentrate in the connection section between the bottom end of the tower and the base.

In US 2010/122508 A1, a wind turbine is described, wherein the tower of the turbine comprises one or more tubular tower sections having an outer jacket wall and an inward directed flange in its lower and upper ends, and at least one platform arranged inside the tower for facilitating access for maintenance and repairs to the inner of the tower and to the nacelle. It is an object to provide a tower for a wind turbine, in which platforms and other equipment may be arranged inside the tower in a cost effective and highly flexible way without weakening the tower structure.

### SUMMARY OF THE INVENTION

In consideration of the conventional art described above, it is the object of the present invention to provide a structure for mounting parts inside the tower of a wind turbine having good workability and good positional precision, and that is capable of reducing stresses that occur in the connection section between the bottom end of the tower and the base.

According to a first embodiment of the present invention for achieving the purpose described above, there is provided a horizontal axis wind turbine comprising:
a main wind turbine unit for generating electricity;
a tower having a top end section and a bottom end section, the top end section of the tower supporting the main wind turbine unit and the bottom end section of the tower fixed to a base, and the lower end section side of the tower having a hollow space formed therein; and
a frame located in the hollow space of the tower, wherein specified equipment that is used for electrical generation performed by the main wind turbine unit is mounted on the frame,
   wherein
the tower is provided with a first flange configured to extend in the horizontal direction from the bottom end of the tower toward the inside of the hollow space,
the base is provided with a second flange configured to extend along the first flange and substantially in the same direction with the first flange, the second flange is fixed in the vertical direction to the first flange, and each of the first flange and the second flange has a proximal end and a distal end, and the frame is supported by the distal end of the second flange.

According to a further development of the present invention, there is provided a horizontal axis wind turbine, wherein
a recess is provided on the top surface of the second flange on the distal end side, the recess is located further inside the hollow space than the distal end of the first flange; and
the frame is supported by the recess of the second flange.

According to further development of the present invention, there is provided a horizontal axis wind turbine, wherein
the frame has a leg section that is supported by the distal end of the second flange, and a mounting section that is supported by the leg section and on which the specified equipment is mounted,
the leg section is provided with an extending section which extends from the bottom end of the leg section toward the outside of the tower, and
a space is formed between the leg section and the proximal end of the first flange by the extending section.
According to a further development of the present invention, there is provided a horizontal axis wind turbine, further écomprising
another frame standing on the frame.

With the present invention, a frame on which parts are mounted is supported by the tip end section of the second flange of the base section to which the bottom end section of the tower is fastened. As a result, workability improves, and positioning precision of the frames (and mounted parts) with respect to the tower can be secured by the design and manufacturing of the base section and the frames. Consequently, it yields an effect of improving positioning precision without relying on on-site installation. With the present invention, it is possible for the load of the frame and the parts mounted on that frame to apply an initial stress in the reverse direction to the tensile load on the connection section between the bottom end of the tower and the base fitting. As a result, it is possible to reduce the stress occurring in the connection section between the bottom end of the tower and the base side by the amount that the tensile load is cancelled out by the initial stress. In other words, this structure has the effect of being able to improve durability.

Other features and advantages of the present invention will become apparent from the following detailed description, taken in conjunction with the accompanying drawings, which illustrate, by way of example, the principles of the invention.

### BRIEF DESCRIPTION OF THE DRAWING

- FIG. 1: is a perspective view illustrating a structure for mounting parts inside the tower of a wind turbine of an embodiment of the present invention, with the tower being drawn as transparent.
- FIG. 2: is a cross-sectional diagram of the structure for mounting parts inside the tower of a wind turbine of an embodiment of the present invention.
- FIG. 3: is a drawing illustrating the connection section between the bottom end of the tower and the base fittings, and the footing section of the frame in the structure for mounting parts inside the tower of a wind turbine of an embodiment of the present invention.
- FIG. 4: is a drawing illustrating the connection section between the bottom end of the tower and the base fittings, and the footing section of the frame in the structure for mounting parts inside the tower of a wind turbine of another embodiment of the present invention.
- FIG. 5: is a drawing illustrating the connection section between the bottom end of the tower and the base fittings, and the footing section of the frame in the structure for mounting parts inside the tower of a wind turbine of an embodiment of the present invention, and illustrates the state when a tensile load is applied.

### DETAILED DESCRIPTION OF THE INVENTION

An embodiment of the present invention is explained below with reference to the drawings. The following is an embodiment of the present invention and does not limit the invention.

The structure for mounting parts inside the tower of a wind turbine of this embodiment is applied, for example, to a large horizontal-axis wind turbine. A horizontal-axis wind turbine comprises a rotor having blades and a hub that holds the blades, a nacelle that axially supports the rotor by way of a main shaft that is connected to the hub, and a tower that supports the nacelle such that the nacelle is capable of free yaw rotation.

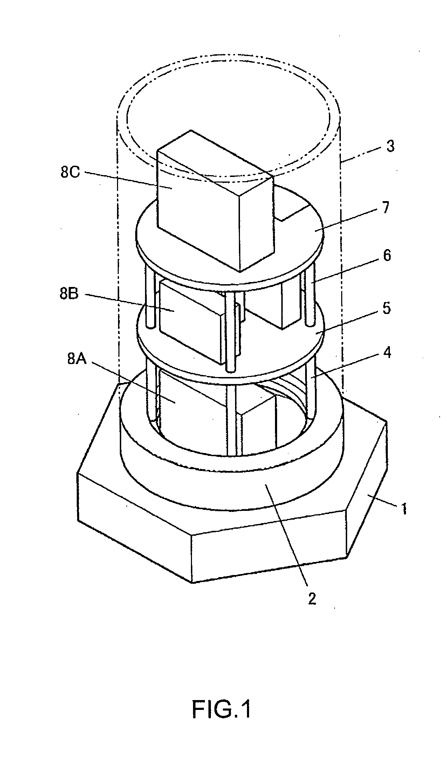

The tower is erected on a base using the construction illustrated in FIG. 1.

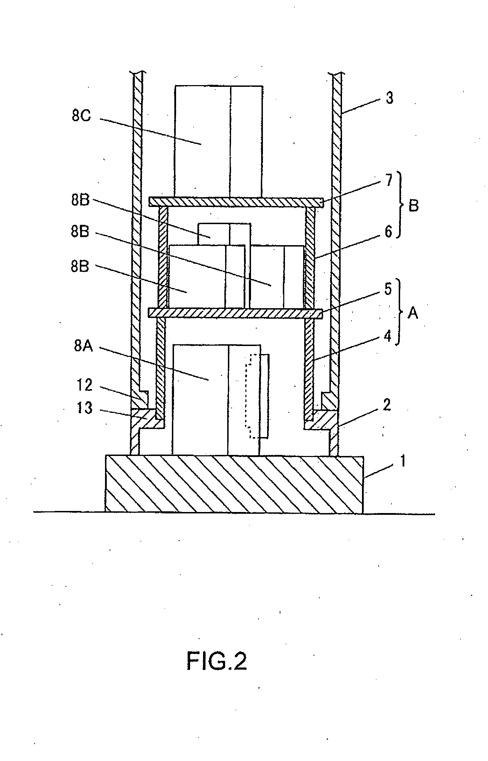

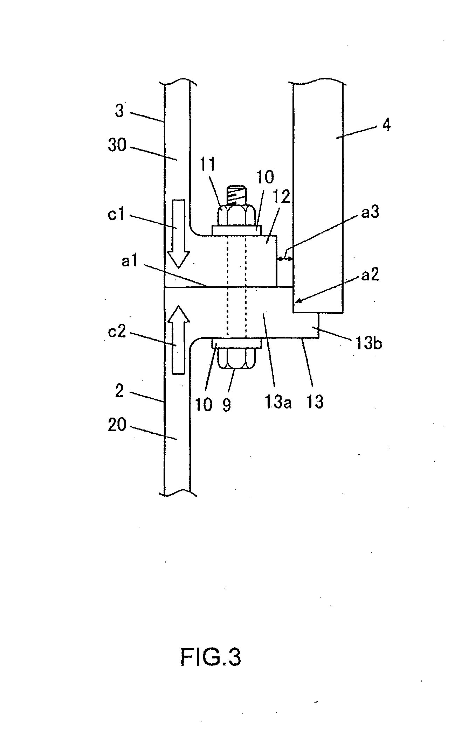

As illustrated in FIG. 1, the base fitting 2 is embedded in and fastened to the base 1. The base fitting 2 is cylindrical in shape, and as illustrated in FIG. 2 and FIG. 3, an inner flange 13 is provided on the top end. The tower 3 is cylindrical in shape, and as illustrated in FIG. 1 and FIG. 2, is placed on the base fitting 2. An inner flange 12 is provided on the bottom end of the tower 3.

As illustrated in FIG. 2 and FIG. 3 side wall section 30 of the tower 3 is placed on the side wall 20 of the base fitting 2, and the underneath side of the inner flange 12 is placed together with the upper side of the inner flange 13 of the base fitting 2.

Bolt insertion holes are formed in the inner flange 12 and inner flange 13, and as illustrated in FIG. 3, bolts 9 are inserted through the bolt insertion holes, and the inner flange 13 of the base fitting 2 and the inner flange 12 of the tower 3 are fastened together by the bolts 9 and nuts 11. As appropriate, washers 10 are used.

The tower is erected with this kind of construction.

A frame A and frame B are located inside the tower 3. Frame A is a lower frame and is supported by the base fitting 2. Frame B is an upper frame and is located above frame A. Frame A has a part mounting unit 5, and a plurality of leg sections 4, 4, that upwardly support that part mounting unit 5. The frame B has a part mounting unit 7 and a plurality of leg sections 6, 6, ... that upwardly support that part mounting unit 7. In the figure, the leg sections 4 and leg sections 6 are column shaped members, however they are not limited to this form.
As illustrated in FIG. 3, an inside end section 13b that protrudes further inward than the inside end of the inner flange 12 of the tower 3 is provided on the inside end of the inner flange 13 of the base fitting 2. A portion 13a of the inner flange 13 is the connecting portion that connects to the inner flange 12. The inside end section 13b is formed such that it protrudes even further inward from the connecting portion 13a.

The leg sections 4, 4, ... of frame A are placed on the inside end section 13b, and by doing so, frame A is supported by the base fitting 2. In this way, the inside end section 13b is used as the footing for frame A. In other words, the leg sections 4, 4, ... stand on the inside end section 13b and frame A is supported by the base fitting 2.

The inside end section 13b can be formed around the entire circumference, or can be formed in parts that include the locations necessary for the footings of frame A.

Moreover, as illustrated in FIG. 3, the inside end section 13b is located below the surface a1 where the inner flanges 12, 13 fit together by way of a stepped section a2 from that surface a1. The stepped section a2 is located further inside than the inner flange 12, and this makes it possible to maintain a gap a3 between the leg sections 4 and the inner flange 12. The leg section 4 is separated from the nut 11 by the amount of the gap a3, so makes the work of connection using the bolt 9 and nut 11 easier. Also contact between the inner flange 12 and the leg section 4 when the tower is swaying is prevented.

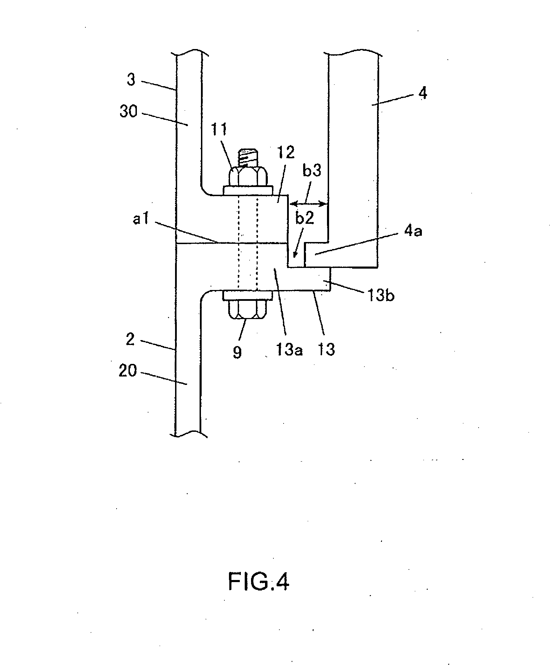

Similar to above, the construction illustrated in FIG. 4 is also effective of other construction for maintaining a gap a3 between the leg section 4 and inner flange 12. The construction illustrated in FIG. 4 has extending section 4a that extends outward from the bottom end of the leg section 4. The extending section 4a is placed on the inside end section 13b. A stepped section b2 is located at the same position as the inside end of the inner flange 12, however, by forming the extending section 4a, it is possible to maintain a gap b3 between the leg section 4 and inner flange 12. Regardless of the construction illustrated in FIG. 4, it is possible to locate a stepped section b2 further inside than the inner flange 12 and to employ both types of construction described above.

As illustrated in FIG. 1 and FIG. 2, parts 8A, 8B and 8C are mounted on this structure. Parts 8A, 8B and 8C are devices such as the power module that are necessary for constructing this wind turbine as a power generator.

Part 8A is placed on the base 1 on the inside of the base fitting 2. There is a space between the part mounting unit 5 of frame A and the base 1, and part 8A is placed in this space.

Part 8B is mounted on the part mounting unit 5 of frame A. There is space between the part mounting unit 7 of frame B and the part mounting unit 5 of frame A, and part 8B is placed in this space.

Part 8C is mounted on the part mounting unit 7 of frame B.

As described above, this structure is constructed with frames A and B, and has two layers of part mounting units. When the base 1 is included, there are three layers of part mounting spaces. Furthermore, it is possible to place a frame above frame B and increase the part mounting layers. Regardless of this embodiment, the invention can be embodied without employing frame B above the frame.

The procedure for assembling this structure can be performed as describe below, for example.

After the work of installing the base 1 and base fitting 2 has been completed, part 8A is installed on the base 1.

Next, frame A is installed on top of the base fitting 2.

Part 8B is then installed on the part mounting 5 unit of frame A.

Next, frame B is installed on top frame A.

Part 8C is installed on the part mounting unit 7 of frame B.

Finally, the tower 3 is placed on the base fitting and connected as described above.

The invention has a structure as described above, so a compressing load that is transmitted from the side wall section 30 of the tower 3 as the tower 3 sways is directly transmitted from the side wall section 30 of the tower 3 to the side wall section 20 of the base fitting 2 as indicated by arrows c1 and c2 in FIG. 3, and thus excessive stress does not occur at the connection section between the tower 3 and the base fitting 2.

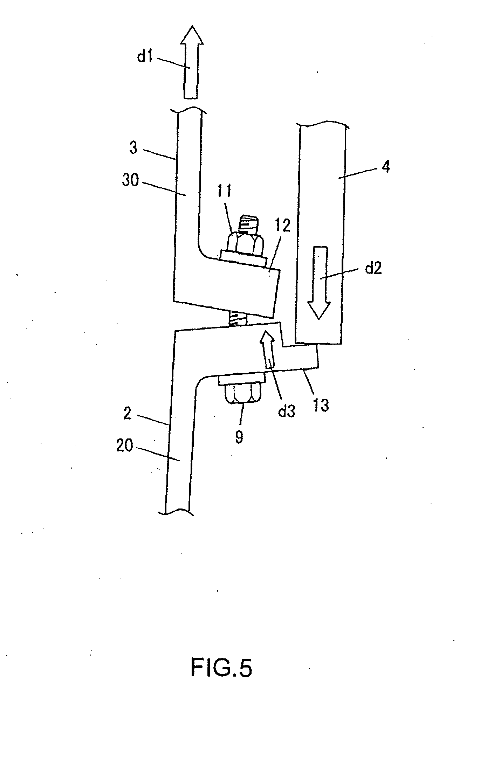

As illustrated in FIG. 5, a tensile load that is transmitted from the side wall section 30 of the tower 3 as the tower 3 sways is transmitted to the side wall section 20 of the base fitting 2 by way of the connection section between the tower 3 and base fitting 2, or in other words by way of the inner flange 12, nut 11, bolt 9 and inner flange 13.

However, the weight d2 of the frames A and B and the weight of the parts 8A, 8B and 8C placed on the frames A and B applies an initial stress to the connection section between the tower 3 and base fitting 2 that acts in a direction opposite of the tensile load d1.

Therefore, even though a tensile load d1 is applied, the stress d3 that occurs in the connection section between the tower 3 and the base fitting 2 is reduced by the amount cancelled out by the initial stress, and thus the durability of the connection section can be improved.

In the present embodiment, the leg section 4 of the frame A was supported by the inside end section of the inner flange 13 of the base fitting 2. However, it is also possible to support the leg section 4 of the frame A by the inside end section of the inner flange 12 of the tower 3.

It is to be understood that the above-described embodiments are illustrative of only a few of the many possible specific embodiments that can represent applications of the principles of the invention. Numerous and varied other arrangements can be readily devised by those skilled in the art without departing from the scope of the invention.

### LIST OF REFERENCE SIGNS

- 1: base
- 2: base fitting
- 3: tower
- 4: leg section
- 4a: extending section
- 5: part mounting unit
- 6: leg section
- 7: part mounting unit
- 8A, 8B, 8C: parts
- 9: bolt
- 10: washer
- 11: nut
- 12: inner flange
- 13: inner flange
- 13a: connecting portion
- 13b: inside end section
- 20: side wall
- 30: side wall section
- a1: surface
- a2: stepped section
- a3: gap
- b2: stepped section
- b3: gap
- c1: arrow
- c2: arrow
- d1: tensile load
- d2: weight
- A: frame
- B: frame

## Claims

1. A horizontal axis wind turbine comprising:
- a main wind turbine unit for generating electricity;
- a tower (3) having a top end section and a bottom end section, the top end section of the tower (3) supporting the main wind turbine unit and the bottom end section of the tower (3) fixed to a base (1), and the lower end section side of the tower (3) having a hollow space formed therein; and
- a frame (A) located in the hollow space of the tower (3), wherein specified equipment (8A, 8B, 8C) that is used for electrical generation performed by the main wind turbine unit is mounted on the frame (A),
- wherein the tower (3) is provided with a first flange (12) configured to extend in the horizontal direction from the bottom end of the tower (3) toward the inside of the hollow space,
- wherein the base (1) is provided with a second flange (13) configured to extend along the first flange (12) and substantially in the same direction with the first flange (12), the second flange (13) is fixed in the vertical direction to the first flange (12), and
- wherein each of the first flange (12) and the second flange (13) has a proximal end and a distal end, and the frame (A) is supported by the distal end of the second flange (13).

2. The horizontal axis wind turbine according to claim 1,
wherein a recess (a3) is provided on the top surface of the second flange (13) on the distal end side, the recess is located further inside the hollow space than the distal end of the first flange (12); and
wherein the frame (A) is supported by the recess of the second flange (13).

3. The horizontal axis wind turbine according to claim 1 or 2,
wherein the frame (A) has a leg section (4) that is supported by the distal end of the second flange (13), and a mounting section (5) that is supported by the leg section (4) and on which the specified equipment is mounted, wherein the leg section (4) is provided with an extending section (4a) which extends from the bottom end of the leg section (4) toward the outside of the tower (3), and
wherein a space (b2, b3) is formed between the leg section (4) and the proximal end of the first flange (12) by the extending section (4a).

4. The horizontal axis wind turbine according to any of claims 1 to 3, further comprising another frame (B) standing on the frame (A).

## Patentansprüche

1. Windturbine mit horizontaler Achse, die Folgendes umfasst:
- eine Hauptwindturbineneinheit zur Erzeugung von Elektrizität;
- einen Turm (3) mit einem oberen Endabschnitt und einem unteren Endabschnitt, wobei der obere Endabschnitt des Turms (3) die Hauptwindturbineneinheit trägt und der untere Endabschnitt des Turms (3) an einer Basis (1) befestigt ist und wobei die Seite des unteren Endabschnitts des Turms (3) einen darin ausgebildeten Hohlraum aufweist; und
- einen Rahmen (A), der in dem Hohlraum des Turms (3) angeordnet ist, wobei eine vorgegebene Ausrüstung (8A, 8B, 8C), die für Elektrizitätserzeugung verwendet wird, die durch die Haupteinheit der Windturbine ausgeführt wird, an dem Rahmen (A) angebracht ist,
- wobei der Turm (3) mit einem ersten Flansch (12) versehen ist, der konfiguriert ist, sich von dem unteren Ende des Turms (3) in horizontaler Richtung in Richtung des Inneren des Hohlraums zu erstrecken,
- wobei die Basis (1) mit einem zweiten Flansch (13) versehen ist, der konfiguriert ist, sich längs des ersten Flansches (12) und im Wesentlichen mit dem ersten Flansch (12) in die gleiche Richtung zu erstrecken, wobei der zweite Flansch (13) in der vertikalen Richtung an dem ersten Flansch (12) befestigt ist, und
- wobei der erste Flansch (12) und der zweite Flansch (13) ein proximales und ein distales Ende aufweisen und wobei der Rahmen (A) von dem distalen Ende des zweiten Flansches (13) gestützt wird.

2. Windturbine mit horizontaler Achse nach Anspruch 1,
wobei eine Aussparung (a3) an der oberen Fläche des zweiten Flansches (13) auf Seiten des distalen Endes vorgesehen ist, wobei die Aussparung weiter im Inneren des Hohlraums als das distale Ende des ersten Flansches (12) angeordnet ist; und
wobei der Rahmen (A) durch die Aussparung des zweiten Flansches (13) gestützt wird.

3. Windturbine mit horizontaler Achse nach Anspruch 1 oder 2,
wobei der Rahmen (A) einen Beinabschnitt (4), der durch das distale Ende des zweiten Flansches (13) gestützt wird, und einen Anbringungsabschnitt (5), der durch den Beinabschnitt (4) gestützt wird, und an dem die vorgegebene Ausrüstung angebracht ist, aufweist,
wobei der Beinabschnitt (4) mit einem verlängerten Abschnitt (4a) versehen ist, der sich von dem unteren Ende des Beinabschnitts (4) in Richtung der Außenseite des Turms (3) erstreckt, und
wobei durch den verlängerten Abschnitt (4a) zwischen dem Beinabschnitt (4) und dem proximalen Ende des ersten Flansches (12) ein Zwischenraum (b2, b3) gebildet wird.

4. Windturbine mit horizontaler Achse nach einem der Ansprüche 1 bis 3, die ferner einen weiteren Rahmen (B) umfasst, der auf dem Rahmen (A) steht.

## Revendications

1. Turbine éolienne à axe horizontal, comprenant :
- une unité de turbine éolienne principale pour générer de l'électricité ;
- une tour (3) ayant une section terminale supérieure et une section terminale inférieure, la section terminale supérieure de la tour (3) supportant l'unité de turbine éolienne principale et la section terminale inférieure de la tour (3) étant fixée à une base (1) et le côté de la tour (3) vers la section terminale inférieure comporte un espace creux formé à l'intérieur, et
- un cadre (A) situé dans l'espace creux de la tour (3), dans laquelle un équipement spécifique (8A, 8B, 8C) qui est utilisé pour la génération d'électricité exécutée par l'unité de turbine éolienne principale est monté sur le cadre (A),
- dans laquelle la tour (3) est dotée d'une première bride (12) configurée pour s'étendre dans la direction horizontale depuis l'extrémité inférieure de la tour (3) vers l'intérieur de l'espace creux,
- dans laquelle la base (1) est dotée d'une seconde bride (13) configurée pour s'étendre le long de la première bride (12) et sensiblement dans la même direction avec la première bride (12), la seconde bride (13) étant fixée dans la direction verticale sur la première bride (12), et
- dans laquelle chacune de la première bride (12) et de la seconde bride (13) possède une extrémité proximale et une extrémité distale, et le cadre (A) est supporté par l'extrémité distale de la seconde bride (13).

2. Turbine éolienne à axe horizontal selon la revendication 1,
dans laquelle un évidement (a3) est prévu sur la surface supérieure de la seconde bride (13) sur le côté de l'extrémité distale, l'évidement étant situé plus loin à l'intérieur de l'espace creux que l'extrémité distale de la première bride (12) ; et
dans laquelle le cadre (A) est supporté par l'évidement de la seconde bride (13).

3. Turbine éolienne à axe horizontal selon la revendication 1 ou 2,
dans laquelle le cadre (A) comprend une section de pied (4) qui est supportée par l'extrémité distale de la seconde bride (13), et une section de montage (5) qui est supportée par la section de pied (4) et sur laquelle est monté l'équipement spécifique, dans laquelle la section de pied (4) est dotée d'une section en extension (4a) qui s'étend depuis l'extrémité inférieure de la section de pied (4) vers l'extérieur de la tour (3), et
dans laquelle un espace (b2, b3) est formé entre la section de pied (4) et l'extrémité proximale de la première bride (12) par la section en extension (4a).

4. Turbine éolienne à axe horizontal selon l'une quelconque des revendications 1 à 3,
comprenant en outre un autre cadre (B) dressé sur le cadre (A).
